# EUROPÄISCHE PATENTSCHRIFT

(11) **EP 2 833 347 B1**
(45) Veröffentlichungstag und Bekanntmachung des Hinweises auf die Patenterteilung: **18.07.2018**
(21) Anmeldenummer: 14178712.7
(22) Anmeldetag: 28.07.2014
(51) Int. Cl.: G09F 21/04, G09F 27/00, G09F 9/302, B62J 11/00, G09G 3/36

(54) **Bedien- und/oder Anzeigeeinheit**
Operating and/or display unit
Unité de commande et/ou d'affichage

(30) Priorität: 29.07.2013 DE 102013012426
(43) Veröffentlichungstag der Anmeldung: 04.02.2015
(73) Patentinhaber: Marquardt Verwaltungs-GmbH, 78604 Rietheim-Weilheim (DE)
(72) Erfinder: Weisser, Dietmar, 78532 Tuttlingen (DE); Kratt, Markus, 78549 Spaichingen (DE); Dr. Götz, Martin, 78048 Villingen-Schwenningen (DE); Leukart, Selina, 78601 Mahlstetten (DE)
(74) Vertreter: Otten, Roth, Dobler & Partner mbB Patentanwälte

(56) Entgegenhaltungen:
- EP-A1- 1 312 974
- EP-A2- 0 115 575
- EP-A2- 1 564 122

## Beschreibung

Die Erfindung betrifft eine Bedien- und/oder Anzeigeeinheit nach dem Oberbegriff des Patentanspruchs 1.
Eine derartige Bedien- und/oder Anzeigeeinheit ist insbesondere für ein Fahrzeug mit einem Lenker, wie für ein Fahrrad, ein Pedelec, ein E-Bike, ein Motorrad o. dgl., geeignet. Die Bedien- und/oder Anzeigeeinheit dient in der Art einer HMI(Human-Maschine-Interface)-Einheit am Lenker.
Eine solche aus der EP 1 564 122 A2 oder der EP 1 312 974 A1 bekannte Bedien- und/oder Anzeigeeinheit weist ein Gehäuse und ein Display zur Anzeige von Daten oder auch von sonstigen Informationen auf. Eine Displayabdeckung ist an einer Oberfläche des Gehäuses, nämlich an der Sichtoberfläche für den Benutzer, angeordnet. Zur Visualisierung für den Benutzer ist eine Beleuchtung für das Display vorgesehen, die vor allem zur Hintergrundbeleuchtung des Displays dient. Ein Photosensor ist zur Messung der Umgebungshelligkeit in und/oder an der Bedien- und/oder Anzeigeeinheit vorgesehen. Die Leuchtstärke der Beleuchtung ist korrespondierend zur gemessenen Umgebungshelligkeit veränderbar, also ist somit die Hintergrundbeleuchtung an die Umgebungshelligkeit anpassbar. Es hat sich jedoch herausgestellt, dass die Visualisierung nicht in allen Fällen ausreichend und/oder befriedigend ist.
Der Erfindung liegt die Aufgabe zugrunde, die Visualisierung der Anzeige für die Bedien- und/oder Anzeigeeinheit zu verbessern. Insbesondere soll die Bedien- und/oder Anzeigeeinheit im Hinblick auf die Optimierung der Hintergrundbeleuchtung weitergebildet werden.

Diese Aufgabe wird bei einer gattungsgemäßen Bedien- und/oder Anzeigeeinheit durch die kennzeichnenden Merkmale des Anspruchs 1 gelöst.

Bei der erfindungsgemäßen Bedien- und/oder Anzeigeeinheit ist wenigstens ein Teil der Randkontur der Displayabdeckung derart ausgestaltet, dass dieser Teil der Randkontur als Lichtleiter zur Weiterleitung des aus der Umgebung einfallenden Lichts zum Photosensor dient. Dies dient auch dem Zweck der Einsparung von Einzelteilen. Der den Lichtleiter bildende Teil der Randkontur umfasst einen von der Displayabdeckung ins Innere des Gehäuses im wesentlichen vertikal abgehenden ersten Schenkel, einen vom ersten Schenkel im wesentlichen horizontal abgehenden zweiten Schenkel und einen vom zweiten Schenkel im wesentlichen vertikal abgehenden dritten Schenkel. Eine solche Ausgestaltung ermöglicht, dass das einfallende Licht im wesentlichen parallel versetzt bis zum Photosensor geleitet wird, wodurch wiederum auf einfache Art und Weise der Photosensor von außen nichtsichtbar im Gehäuse angeordnet werden kann. Weitere Ausgestaltungen der Erfindung sind Gegenstand der Unteransprüche.

In weiterer Ausgestaltung kann die als Schutzabdeckung für das Display vorgesehene Displayabdeckung in kostengünstiger Art aus Kunststoff bestehen. Zweckmäßigerweise kann die Displayabdeckung für sichtbares Licht weitgehend transparent sein.

Das Display kann wiederum in einfacher Art und Weise der Displayabdeckung zugewandt im Gehäuse angeordnet sein. Desweiteren kann es sich anbieten, dass der Photosensor derart im Gehäuse angeordnet ist, dass der Photosensor von außen nicht sichtbar ist.

Der Photosensor kann unterhalb des Displays und/oder neben dem Display im Gehäuse befindlich sein, womit dieser vor äußeren Einflüssen geschützt angeordnet ist. In einfacher Art und Weise kann der den Lichtleiter bildende Teil der Randkontur des Displays Stufen-Absatz-förmig ausgestaltet sein. Zwecks einfacher Integration der Displayabdeckung in die sichtbare Oberfläche am Gehäuse kann das Gehäuse an der die Displayabdeckung aufnehmenden Oberfläche einen die Absatzstufe überdeckenden Gehäuserand besitzen.
Es kann sich weiterhin anbieten, dass der dritte Schenkel des den Lichtleiter bildenden Teils der Randkontur in Richtung zum Photosensor verlängert ist. Dadurch wird das einfallende Licht im wesentlichen verlustfrei zum Photosensor geführt. Zwecks weiterer Steigerung der Effizienz kann die dem Photosensor zugewandte Oberfläche des dritten Schenkels in der Art einer Linse ausgestaltet sein, so dass das einfallende Licht auf den Photosensor fokussiert wird.
In einfacher Art und Weise kann am Fahrzeug eine Halterung für die Bedien- und/oder Anzeigeeinheit vorgesehen sein. Es kann sich weiterhin anbieten, dass die Halterung eine Befestigung für die Fixierung am Lenker besitzt. Zwecks einfacher Anbringung kann die Halterung eine Aufnahme für die Bedien- und/oder Anzeigeeinheit aufweisen.
Für eine besonders bevorzugte Ausgestaltung der Erfindung ist nachfolgendes festzustellen. Zur Optimierung der Hintergrundbeleuchtung soll die Umgebungshelligkeit eines Anzeigegerätes, speziell eines HMI(Human Maschine Interface)s für Pedelecs, E-Bikes, Fahrräder o. dgl., gemessen werden. Hierfür kann ein Fotosensor eingesetzt werden, welcher durch ein separates Fenster die Umgebungshelligkeit ermittelt und/oder senkrecht durch das Displayfenster das Licht empfängt. Ein solcher Fotosensor ist somit von außen sichtbar.
In weiterer Ausgestaltung der Erfindung kann ein zur Displayschutzabdeckung benötigtes Kunststoffteil als Lichtleiter für den Fotosensor verwendet werden. Hierbei ist der Fotosensor somit von außen nicht erkennbar bzw. es ist ein zusätzlicher Durchbruch oder eine Abdeckung für den Fotosensor nicht erforderlich. In diesem Fall dient das Displayschutzglas als Abdeckung für das Display und gleichzeitig als Lichtleiter für den Fotosensor.

Die Kontur der Displayabdeckung kann so ausgestaltet werden, dass die Randkontur als Lichtleiter fungiert. Somit werden Anteile des Lichts, welche durch die Abdeckung einfallen, über diese zum Fotosensor geleitet.

Die mit der Erfindung erzielten Vorteile bestehen insbesondere darin, dass der einen Photosensor umfassende Lichtsensor von außen nicht erkennbar ist. Insbesondere stört der Lichtsensor somit das Design der Bedien- und/oder Anzeigeeinheit nicht. Weiter ist eine Einsparung von Fläche gegeben, da der Photosensor unterhalb des Displays und/oder direkt neben dem Display sitzen kann. Dadurch kann die Bedien- und/oder Anzeigeeinheit kompakt ausgestaltet werden.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Fahrrad, das mit einer Bedien- und/oder Anzeigeeinheit ausgestattet ist, in schematischer Ansicht,
- Fig. 2: einen Detailausschnitt gemäß Ziff. II aus Fig. 1 in perspektischer Ansicht,
- Fig. 3: die aufgeschnitten dargestellte Bedien- und/oder Anzeigeeinheit aus Fig. 2 in perspektivischer Ansicht und
- Fig. 4: einen vergrößerten Ausschnitt des Randbereichs aus der Fig. 3.

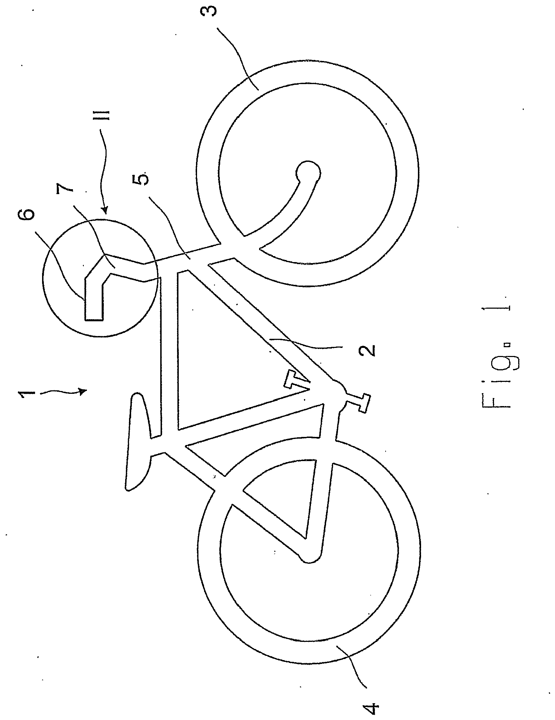

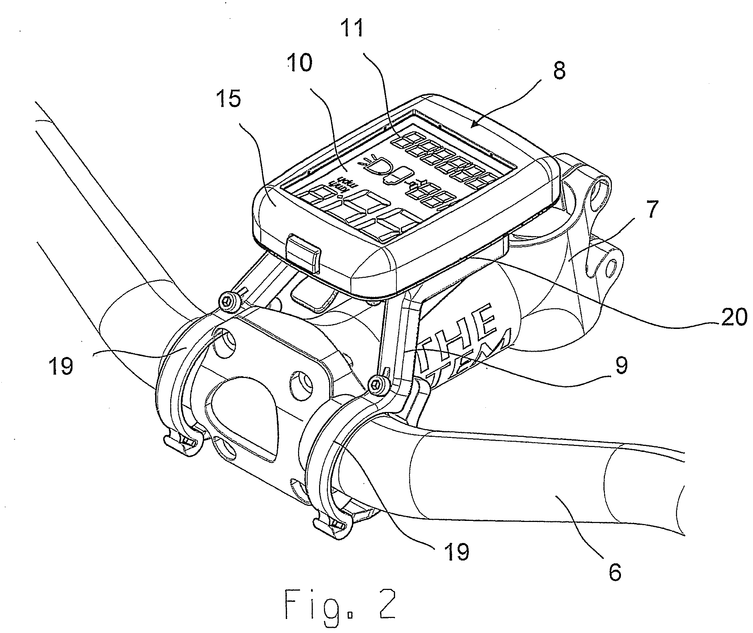

In Fig. 1 ist ein in herkömmlicher Weise ausgestaltetes Fahrrad 1 zu sehen. Das Fahrrad 1 weist einen Rahmen 2, ein Vorderrad 3 sowie ein Hinterrad 4, und eine Lenksäule 5 für das Vorderrad 3 auf. An der Lenksäule 5 ist ein rohrförmiger Lenker 6 mittels eines Lenkervorbaus 7 befestigt. Über dem Lenkervorbau 7 ist eine Bedien- und/oder Anzeigeeinheit 8 in der Art eines HMI(Human-Machine-Interface) mittels einer Halterung 9 angeordnet, wie in Fig. 2 zu sehen ist.

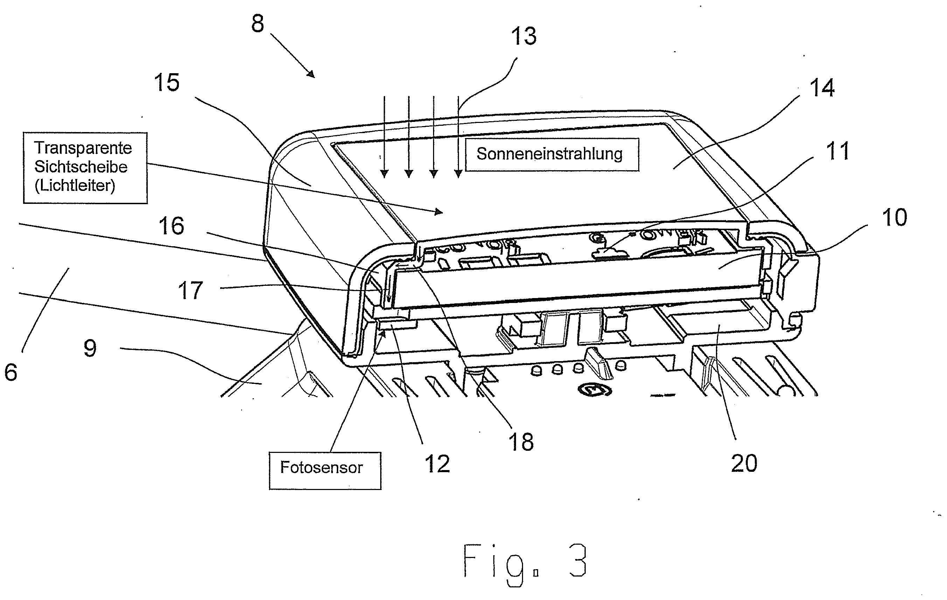

Die Bedien- und/oder Anzeigeeinheit 8 besitzt ein Display 10 zur Anzeige von Daten 11 oder sonstigen Informationen, beispielsweise der aktuellen Geschwindigkeit des Fahrrads 1, wie anhand von Fig. 2 zu sehen ist. Das Display 10 weist eine Beleuchtung auf, die für die Hintergrundbeleuchtung des Displays 10 dient. Wie weiter in Fig. 3 zu sehen ist, ist ein Photosensor 12 zur Messung der Umgebungshelligkeit, welche hier mittels der Sonnenstrahlung 13 dargestellt ist, in und/oder an der Bedien- und/oder Anzeigeeinheit 8 vorgesehen. Die Leuchtstärke der Beleuchtung für die Hintergrundbeleuchtung ist korrespondierend zur gemessenen Umgebungshelligkeit anpassbar veränderbar, um den Benutzer eine gute Lesbarkeit der dargestellten Daten 11 zu gestatten.

Die Bedien- und/oder Anzeigeeinheit 8 weist ein Gehäuse 15 auf. Das Display 10 besitzt eine Displayabdeckung 14 als Schutzabdeckung. Zweckmäßigerweise besteht die Displayabdeckung 14 aus Kunststoff und ist in etwa bündig an einer für den Benutzer sichtbaren Oberfläche des Gehäuses 15 angeordnet. Das Display 10 ist der Displayabdeckung 14 zugewandt im Inneren des Gehäuses 15 angeordnet. Die Displayabdeckung 14 ist für sichtbares Licht weitgehend transparent. Der Photosensor 12 ist derart im Gehäuse 15 angeordnet, dass der Photosensor 12 von außen nicht sichtbar ist. Wenigstens ein Teil der Displayabdeckung 14 dient dabei als Lichtleiter für die Weiterleitung des aus der Umgebung einfallenden Lichts 13 zum Photosensor 12.

Wie man weiter der Fig. 3 entnimmt ist der Photosensor 12 unterhalb des Displays 10 sowie neben dem Display 10 im Gehäuse 15 befindlich. Wenigstens ein Teil der Randkontur 16 der Displayabdeckung 14 ist derart ausgestaltet, dass dieser Teil der Randkontur 16 als Lichtleiter zur Weiterleitung des aus der Umgebung einfallenden Lichts 13 zum Photosensor 12 dient, wie anhand der weitergeleiteten Lichtstrahlen 17 in Fig. 3 angedeutet ist. Hierzu weist die Randkontur 16 der Displayabdeckung 14 einen Stufen-Absatz 18 auf, womit auch der den Lichtleiter bildende Teil der Randkontur 16 Stufen-Absatz-förmig ausgestaltet ist.

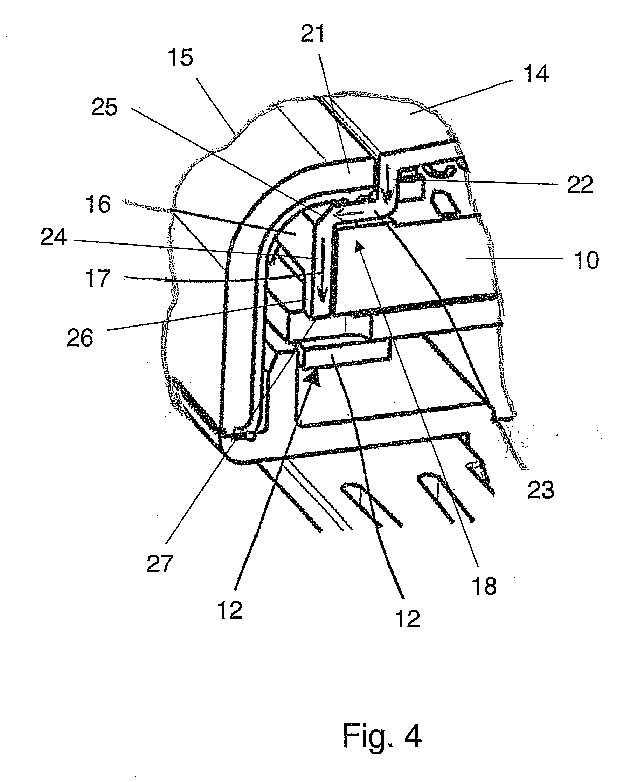

Das Gehäuse 15 besitzt gemäß Fig. 4 zur bündigen Anordnung an der die Displayabdeckung 14 aufnehmenden Oberfläche einen die Absatzstufe 18 überdeckenden Gehäuserand 21.

Wie man weiter anhand von Fig. 4 erkennt, umfasst die Randkontur 16 einen von der Displayabdeckung 14 ins Innere des Gehäuses 15 im wesentlichen vertikal abgehenden ersten Schenkel 22, einen daran anschließenden, vom ersten Schenkel 22 im wesentlichen horizontal abgehenden zweiten Schenkel 23 und einen hieran anschließenden, vom zweiten Schenkel 23 im wesentlichen vertikal abgehenden dritten Schenkel 24. Die Schenkel 22, 23, 24 schließen mittels Reflektionsflächen 25 aneinander an, so dass der den Lichtleitleiter bildende Teil der Randkontur 16 das einfallende Licht 13 entsprechend den weitergeleiteten Lichtstrahlen 17 im wesentlichen parallel versetzt auf den Photosensor 12 leitet. Der dritte Schenkel 24 des den Lichtleiter bildenden Teils der Randkontur 16 besitzt in Richtung zum Photosensor 12 eine Verlängerung 26 gegenüber der restliche Randkontur 16, um die weitergeleiteten Lichtstrahlen 17 im wesentlichen verlustfrei zum Photosensor 12 zu führen. Zur Steigerung der Effizienz ist die dem Photosensor 12 zugewandte Oberfläche des dritten Schenkels 24 bzw. der Verlängerung 26 in der Art einer Linse 27 ausgestaltet, derart dass das einfallende Licht 13 sowie das weitergeleitete Licht 17 auf den Photosensor 12 fokussiert ist.

Wie in Fig. 2 zu sehen ist, besitzt die am Fahrrad 1 angeordnete Halterung 9 für die Bedien- und/oder Anzeigeeinheit 8 eine Befestigung 19 für die Fixierung am Lenker 6. Desweiteren weist die Halterung 9 eine Aufnahme 20 für die Bedien- und/oder Anzeigeeinheit 8 auf, wobei die Bedien- und/oder Anzeigeeinheit 8 abnehmbar an der Aufnahme 20 befestigt werden kann.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Bedien- und/oder Anzeigeeinheit 8 nicht nur an einem Fahrrad 1 sondern auch an sonstigen Fahrzeugen, insbesondere Zweirädern, welche mit einem Lenker gesteuert werden, Verwendung finden. Beispielsweise kann die Bedien- und/oder Anzeigeeinheit 8 an Pedelecs, E-Bikes, Motorräder, Quads o. dgl., die ein HMI im Außenbereich haben, verwendet werden.

### Bezugszeichen-Liste:

- 1:: Fahrrad
- 2:: Rahmen
- 3:: Vorderrad
- 4:: Hinterrad
- 5:: Lenksäule
- 6:: Lenker
- 7:: Lenkervorbau
- 8:: Bedien- und/oder Anzeigeeinheit
- 9:: Halterung
- 10:: Display
- 11:: Daten
- 12:: Photosensor
- 13:: Sonnenstrahlung / (aus Umgebung einfallendes) Licht
- 14:: Displayabdeckung
- 15:: Gehäuse
- 16:: Randkontur (von Displayabdeckung)
- 17:: (weitergeleitete) Lichtstrahlen / Licht
- 18:: Stufen-Absatz (von Randkontur) / Absatzstufe
- 19:: Befestigung (von Halterung)
- 20:: Aufnahme (an Halterung)
- 21:: Gehäuserand
- 22:: (erster) Schenkel (der Randkontur)
- 23:: (zweiter) Schenkel (der Randkontur)
- 24:: (dritter) Schenkel (der Randkontur)
- 25:: Reflektionsfläche (an Schenkel)
- 26:: Verlängerung (am dritten Schenkel)
- 27:: Linse

## Patentansprüche

1. Bedien- und/oder Anzeigeeinheit, insbesondere an einem Fahrzeug mit einem Lenker (6), wie einem Fahrrad (1), einem Pedelec, einem E-Bike oder einem Motorrad, mit einem Gehäuse (15), mit einem Display (10) zur Anzeige von Daten (11), mit einer an einer Oberfläche des Gehäuses (15) angeordneten Displayabdeckung (14), und mit einer Beleuchtung für das Display (10), insbesondere zu dessen Hintergrundbeleuchtung, wobei ein Photosensor (12) zur Messung der Umgebungshelligkeit in und/oder an der Bedien- und/oder Anzeigeeinheit (8) vorgesehen ist, wobei die Leuchtstärke der Beleuchtung korrespondierend zur gemessenen Umgebungshelligkeit veränderbar ist, und wobei wenigstens ein Teil der Randkontur (16) der Displayabdeckung (14) als Lichtleiter für die Weiterleitung des aus der Umgebung einfallenden Lichts (13) zum Photosensor (12) dient, **dadurch gekennzeichnet, dass** der den Lichtleiter bildende Teil der Randkontur (16) einen von der Displayabdeckung (14) ins Innere des Gehäuses (15) im wesentlichen vertikal abgehenden ersten Schenkel (22), einen vom ersten Schenkel (22) im wesentlichen horizontal abgehenden zweiten Schenkel (23) und einen vom zweiten Schenkel (23) im wesentlichen vertikal abgehenden dritten Schenkel (24) umfasst, derart dass das einfallende Licht (13) im wesentlichen parallel versetzt bis zum Photosensor (12) geleitet wird.

2. Bedien- und/oder Anzeigeeinheit nach Anspruch 1, **dadurch gekennzeichnet, dass** die Displayabdeckung (14) aus Kunststoff besteht.

3. Bedien- und/oder Anzeigeeinheit nach Anspruch 1 oder 2, **dadurch gekennzeichnet, dass** die Displayabdeckung (14) für sichtbares Licht weitgehend transparent ist.

4. Bedien- und/oder Anzeigeeinheit nach Anspruch 1, 2 oder 3, **dadurch gekennzeichnet, dass** das Display (10) der Displayabdeckung (14) zugewandt im Gehäuse (15) angeordnet ist.

5. Bedien- und/oder Anzeigeeinheit nach einem der Ansprüche 1 bis 4, **dadurch gekennzeichnet, dass** der Photosensor (12) derart im Gehäuse (15) angeordnet ist, dass der Photosensor (12) von außen nicht sichtbar ist.

6. Bedien- und/oder Anzeigeeinheit nach Anspruch 5, **dadurch gekennzeichnet, dass** der Photosensor (12) unterhalb des Displays (10) und/oder neben dem Display (10) im Gehäuse (15) befindlich ist.

7. Bedien- und/oder Anzeigeeinheit nach einem der Ansprüche 1 bis 6, **dadurch gekennzeichnet, dass** der den Lichtleiter bildende Teil der Randkontur (16) des Displays (10) Stufen-Absatz-förmig ausgestaltet ist, und dass das Gehäuse (15) an der die Displayabdeckung (14) aufnehmenden Oberfläche einen die Absatzstufe (18) überdeckenden Gehäuserand (21) besitzt.

8. Bedien- und/oder Anzeigeeinheit nach einem der Ansprüche 1 bis 7, **dadurch gekennzeichnet, dass** der dritte Schenkel (24) des den Lichtleiter bildenden Teils der Randkontur (16) in Richtung zum Photosensor (12) verlängert ist.

9. Bedien- und/oder Anzeigeeinheit nach einem der Ansprüche 1 bis 8, **dadurch gekennzeichnet, dass** die dem Photosensor (12) zugewandte Oberfläche des dritten Schenkels (24) in der Art einer Linse (27) ausgestaltet ist, derart dass das einfallende Licht (13) auf den Photosensor (12) fokussiert wird.

10. Bedien- und/oder Anzeigeeinheit nach einem der Ansprüche 1 bis 9, **dadurch gekennzeichnet, dass** am Fahrzeug eine Halterung (9) für die Bedien- und/oder Anzeigeeinheit (8) vorgesehen ist.

11. Bedien- und/oder Anzeigeeinheit nach Anspruch 10, **dadurch gekennzeichnet, dass** die Halterung (9) eine Befestigung (19) für die Fixierung am Lenker (6) besitzt.

12. Bedien- und/oder Anzeigeeinheit nach Anspruch 10 oder 11, **dadurch gekennzeichnet, dass** die Halterung (9) eine Aufnahme (20) für die Bedien- und/oder Anzeigeeinheit (8) aufweist.

## Claims

1. Operating and/or display unit, particularly on a vehicle with a handlebar (6), such as a bicycle (1), a pedelec, an e-bike or a motorbike, having a housing (15), having a display (10) for displaying data (11), having a display cover (14) arranged on a surface of the housing (15), and having a light for the display (10), particularly for its background lighting, wherein a photosensor (12) for measuring the ambient brightness is provided in and/or on the operating and/or display unit (8), wherein the light intensity of the lighting can be changed according to the measured ambient brightness, and wherein at least a part of the edge contour (16) of the display cover (14) acts as a light conductor for the redirection of the light (13) penetrating from the surroundings to the photosensor (12), **characterised in that** the part of the edge contour (16) forming the light conductor comprises a first bracket (22) extending substantially vertically from the display cover (14) into the interior of the housing (15), a second bracket (23) extending substantially horizontally from the first bracket (22) and a third bracket (24) extending substantially vertically from the second bracket (23), such that the penetrating light (13) is conducted substantially parallelly offset to the photosensor (12).

2. The operating and/or display unit according to claim 1, **characterised in that** the display cover (14) is made of plastic.

3. The operating and/or display unit according to claim 1 or 2, **characterised in that** the display cover (14) is largely transparent for visible light.

4. The operating and/or display unit according to claim 1, 2 or 3, **characterised in that** the display (10) of the display cover (14) is arranged facing the housing (15).

5. The operating and/or display unit according to one of claims 1 to 4, **characterised in that** the photosensor (12) is arranged in the housing (15) such that the photosensor (12) is not visible from the exterior.

6. The operating and/or display unit according to claim 5, **characterised in that** the photosensor (12) is located below the display (10) and/or next to the display (10) in the housing (15).

7. The operating and/or display unit according to one of claims 1 to 6, **characterised in that** the part of the edge contour (16) of the display (10) forming the light conductor is designed in the form of a stepped shoulder, and **in that** the housing (15) has a housing edge (21) overlaying the shoulder edge (18) on the surface incorporating the display cover (14).

8. The operating and/or display unit according to one of claims 1 to 7, **characterised in that** the third bracket (24) of the part of the edge contour (16) forming the light conductor is extended in the direction of the photosensor (12).

9. The operating and/or display unit according to one of claims 1 to 8, **characterised in that** the surface of the third bracket (24) facing the photosensor (12) is designed in the form of a lens (27), such that the penetrating light (13) is focussed on the photosensor (12).

10. The operating and/or display unit according to one of claims 1 to 9, **characterised in that** a holder (9) is provided for the operating and/or display unit (8) on the vehicle.

11. The operating and/or display unit according to claim 10, **characterised in that** the holder (9) has a mounting (19) for fixing onto the handlebar (6).

12. The operating and/or display unit according to claim 10 or 11, **characterised in that** the holder (9) has a receptacle (20) for the operating and/or display unit (8).

## Revendications

1. Unité de commande et/ou d'affichage, en particulier sur un véhicule avec un guidon (6), comme une bicyclette (1), un vélo électrique, un vélo à assistance électronique ou une motocyclette, avec un boîtier (15), avec un écran (10) pour l'affichage de données (11), avec un couvercle d'écran (14) disposé sur une surface du boîtier (15) et avec un éclairage pour l'écran (10), en particulier pour son rétro-éclairage, dans lequel un photodétecteur (12) est prévu pour la mesure de la luminosité ambiante dans et/ou sur l'unité de commande et/ou d'affichage (8), dans lequel l'intensité lumineuse de l'éclairage est modifiable de façon à correspondre à la luminosité ambiante mesurée et dans lequel au moins une partie du contour de délimitation (16) du couvercle d'écran (14) sert de conducteur optique pour la transmission de la lumière (13) incidente de l'environnement au photodétecteur (12), **caractérisée en ce que** la partie formant le conducteur optique du contour de délimitation (16) comprend une première branche (22) sortant essentiellement à la verticale du couvercle d'écran (14) dans l'intérieur du boîtier (15), une deuxième branche (23) sortant essentiellement à l'horizontale de la première branche (22) et une troisième branche (24) sortant de la deuxième branche (23) essentiellement à la verticale, de sorte que la lumière incidente (13) soit dirigée de façon décalée de manière essentiellement parallèle jusqu'au photodétecteur (12).

2. Unité de commande et/ou d'affichage selon la revendication 1, **caractérisée en ce que** le couvercle d'écran (14) est constitué de plastique.

3. Unité de commande et/ou d'affichage selon la revendication 1 ou 2, **caractérisée en ce que** le couvercle d'écran (14) est généralement transparent pour la lumière visible.

4. Unité de commande et/ou d'affichage selon la revendication 1, 2 ou 3, **caractérisée en ce que** l'écran (10) est disposé orienté vers le couvercle d'écran (14) dans le boîtier (15).

5. Unité de commande et/ou d'affichage selon une des revendications 1 à 4, **caractérisée en ce que** le photodétecteur (12) est disposé dans le boîtier (15) de manière à ce que le photodétecteur (12) ne soit pas visible depuis l'extérieur.

6. Unité de commande et/ou d'affichage selon la revendication 5, **caractérisée en ce que** le photodétecteur (12) se trouve sous l'écran (10) et/ou à côté de l'écran (10) dans le boîtier (15).

7. Unité de commande et/ou d'affichage selon une des revendications 1 à 6, **caractérisée en ce que** la partie formant le conducteur optique du contour de délimitation (16) de l'écran (10) est conçu sous forme d'épaulement à gradins et **en ce que** le boîtier (15) possède, sur la surface recevant le couvercle d'écran (14), une délimitation de boîtier (21) recouvrant les gradins d'épaulement (18).

8. Unité de commande et/ou d'affichage selon une des revendications 1 à 7, **caractérisée en ce que** la troisième branche (24) de la partie formant le conducteur optique du contour de délimitation (16) est prolongée en direction du photodétecteur (12).

9. Unité de commande et/ou d'affichage selon une des revendications 1 à 8, **caractérisée en ce que** la surface orientée vers le photodétecteur (12) de la troisième branche (24) est conçue sous la forme d'une lentille (27), de sorte que la lumière incidente (13) soit focalisée sur le photodétecteur (12).

10. Unité de commande et/ou d'affichage selon une des revendications 1 à 9, **caractérisée en ce qu'**un support (9) est prévu sur le véhicule pour l'unité de commande et/ou d'affichage (8).

11. Unité de commande et/ou d'affichage selon la revendication 10, **caractérisée en ce que** le support (9) possède une fixation (19) pour la fixation sur le guidon (6).

12. Unité de commande et/ou d'affichage selon la revendication 10 ou 11, **caractérisée en ce que** le support (9) présente un logement (20) pour l'unité de commande et/ou d'affichage (8).
